# EUROPEAN PATENT SPECIFICATION

(11) **EP 0 581 333 B1**
(45) Date of publication and mention of the grant of the patent: **25.10.1995**
(21) Application number: 93116224.2
(22) Date of filing: 24.11.1988
(51) Int. Cl.: G11B 27/30, G11B 15/087

(54) **Digital tape recorder**
Digitales Bandaufnahmegerät
Enregistreur numérique à bande magnétique

(30) Priority: 27.11.1987 JP 300830/87; 27.11.1987 JP 300831/87; 27.11.1987 JP 300713/87; 03.12.1987 JP 306339/87
(43) Date of publication of application: 02.02.1994
(62) Divisional of application: 88910112.7
(73) Proprietor: MATSUSHITA ELECTRIC INDUSTRIAL CO., LTD., Kadoma-shi, Osaka 571 (JP)
(72) Inventor: Shimada, Hiromichi, Amagasaki-shi, Hyogo-ken (JP)
(74) Representative: Senior, Alan Murray

(56) References cited:
- EP-A- 0 187 029
- EP-A- 0 209 047
- GB-A- 2 191 885
- PATENT ABSTRACTS OF JAPAN vol. 11, no. 362 (P-640)(2809) 26 November 1987 & JP-A-62 137 756 (HITACHI LTD.) 20 June 1987
- PATENT ABSTRACTS OF JAPAN vol. 12, no. 494 (P-805)23 December 1988 & JP-A-63 204 561 (SONY CORP.) 24 August 1988

## Description

This invention relates to a digital tape recorder intended to facilitate the work of the user when rewriting and editing the content of the start ID recorded in a subcode area on the tape showing the start point of a program.

This invention relates to a digital tape recorder capable of independently recording the subcode such as start ID representative of the beginning of a tune afterwards into the tape in which digitized principal signals such as music have been already recorded.

Recently, in the digital tape recorder, it is realized to record the information about signals, for example, the subcode such as start ID to show the beginning of a turn simultaneously with the principal signals or while reproducing the principal signals. The start ID indicates the beginning of a tune (the start point of a program) when its content is changed from 0 to 1, and in the rotary head type digital audio tape recorder, the time to record the start ID=1 is chosen to be about 9 seconds ±1 second so as to enable rewriting in a short time, as well as to prevent overlooking if the tape runs at a high speed.

In respect of recording of the start ID=1, when the input signal level is under a specific level close to no-signal state for a specified time such as 2 or 3 seconds during recording of principal signals, it is judged to be an interval between tunes, and the start ID=1 is recorded automatically, or after the principal signals only or principal signals and start ID are recorded, only the start ID is rewritten (that is, start ID=0 or start ID=1 is recorded). Hereinafter, re-recording of start ID only is called after-recording.

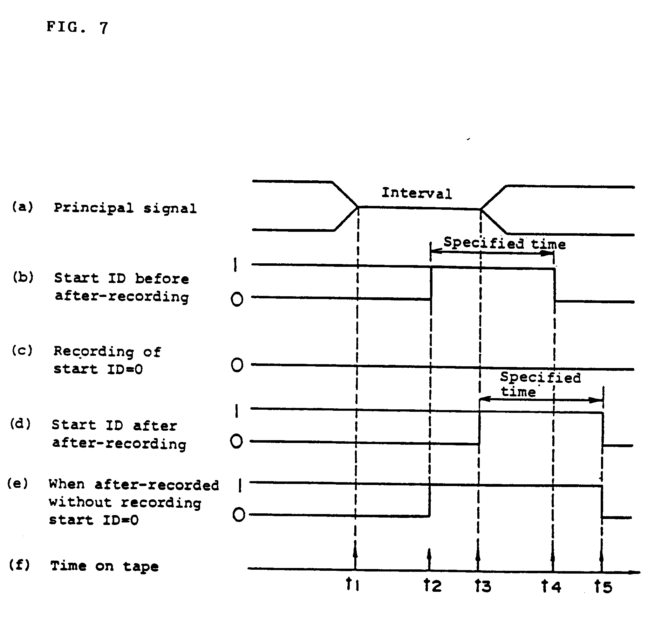

In such a digital tape recorder, when moving the position of the start ID=1 of the tape on which the start ID=1 is once recorded by a short time through after-recording, the operation is explained while referring to FIG. 7. In FIG. 7, a denotes the principal signal possessing an interval from time t₁ to time t₃, and b is the recorded state of start ID before after-recording, and the start ID=1 is recorded from an intermediate time t₂ between tunes to time t₄. In such a tape, in order to after-record the start ID for accurately searching the beginning of a tune from time t₃, once the start ID=0 is recorded as indicated by c, and the tape position of time t₃ at the beginning of a tune is accurately determined, and the start ID=1 must be recorded from time t₃ to time t₅ as indicated by d. If the start ID=1 is after-recorded from time t₃ at the beginning of a tune without recording the start ID=0, there is a state of start ID=1 from time t₂ to time t₅ as shown by e, and accurate searching is impossible, and still more in the rotary head type digital audio tape recorder, since the duration of start ID=1 is chosen to be about 9 seconds as stated above, it is not allowed to record the start ID for a time exceeding the specified time. Therefore, when after-recording the start ID, the previously recorded start ID=1 must be once changed to start ID=0, and then the start ID=1 must be recorded.

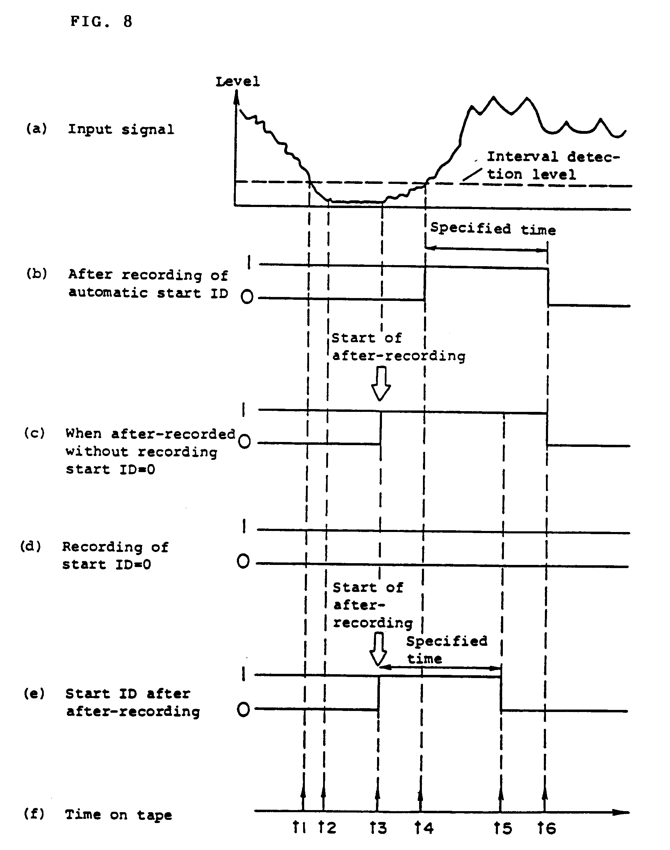

FIG. 8 is a drawing to explain the operation of a conventional digital tape recorder. As shown in FIG. 8 a, when recording such a signal that is smaller than the interval detection level from time t₁ to time t₄ and having an actual interval between time t₂ and time t₃ into a PCM area mentioned below by digitizing it, in the digital tape recorder in which the start ID can be recorded automatically, the time t₄ is judged as the beginning of a tune, and the start ID=1 is recorded in the subcode area mentioned below for a specified time (about 9 seconds) up to tee t₆. In order to search the beginning of the tune accurately in such recorded tape, as a result of recording of the start ID=1 for a specified time (about 9 seconds) from time t₃ to time t₅, the start ID=1 is recorded from time t₃ to time t₆ (see Fig. 8 c). Accordingly, the start ID=1 is recorded for a longer time than the specified time for ordinary start ID=1. In order to prevent the start ID=1 from being recorded for a longer time than the specified time, the user of the digital tape recorder must record the ID=0 from time t₃ to time t₆ once as shown in FIG. 8 d to erase the start ID=1, and then record the start ID=1 for a specified time from time t₃ as shown in FIG. 8 e.

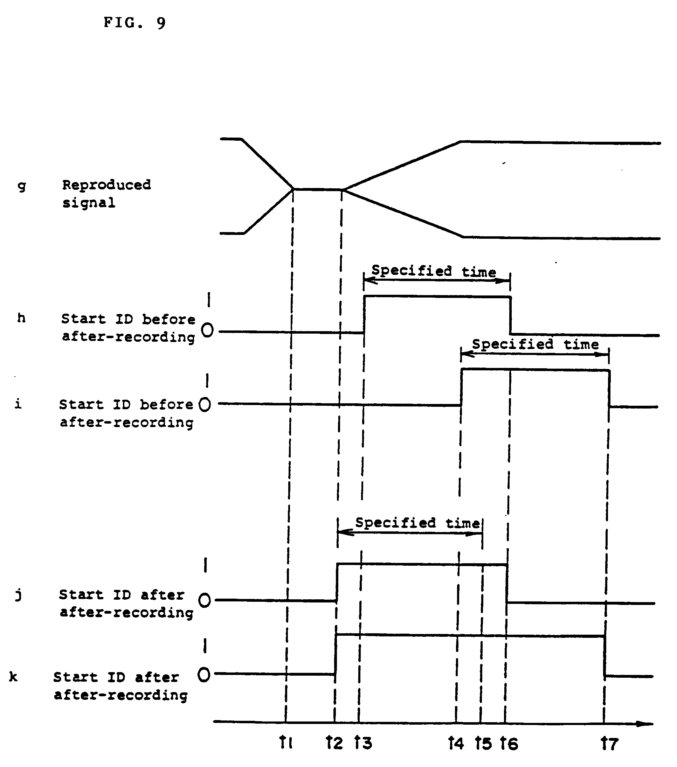

FIG. 9 is a diagram showing the relation between the principal signal and start ID. Referring now to FIG. 9, a description will be made on the case of moving the position of the start ID=1 of the tape in which the start ID=1 is once recorded by after-recording.

In FIG. 9, symbol g denotes a principal signal possessing an interval between time t₁ and time t₂, h and i are start IDs before after-recording, and the start ID=1 recorded for a specified time from time t₃ to time t₆ in h and from time t₄ to time t₇ in i. In order to search the beginning of thus recorded tape accurately, when the start ID=1 is recorded for a specified time from time t₂ to time t₅, as a result, the start ID=1 is recorded in the tape of h from time t₂ to time t₆ as indicated by i, and from time t₂ to time t₇ in the tape of i as indicated by k. Accordingly, the start ID=1 is recorded for a longer time than the specified time for recording the start ID=1 is usually recorded. In order to prevent the start ID=1 from being recorded for a longer time than the specified time, the user of the digital tape recorder must once rewrite the recorded portion of the start ID=1 into the start ID=0, and record again the start ID=1 for a specified time from time t₂.

In the conventional digital tape recorder explained above, when after-recording the start ID=1 from the beginning of a tune, the user of the digital tape recorder must first search the tape position for recording the start ID=1, and check whether the start ID=1 has been recorded for a specified time for recording the start ID=1 from the tape position, and rewrite the recorded portion of the start ID=1 into start ID=0 when the start ID=1 has been recorded, and search again the tape position for recording the start ID=1 because the tape position is moved after checking of start ID and rewriting action, then finally record the start ID=1 for a specified time (about 9 seconds) from that tape position. Thus, the user of the digital tape recorder must encounter complicated works.

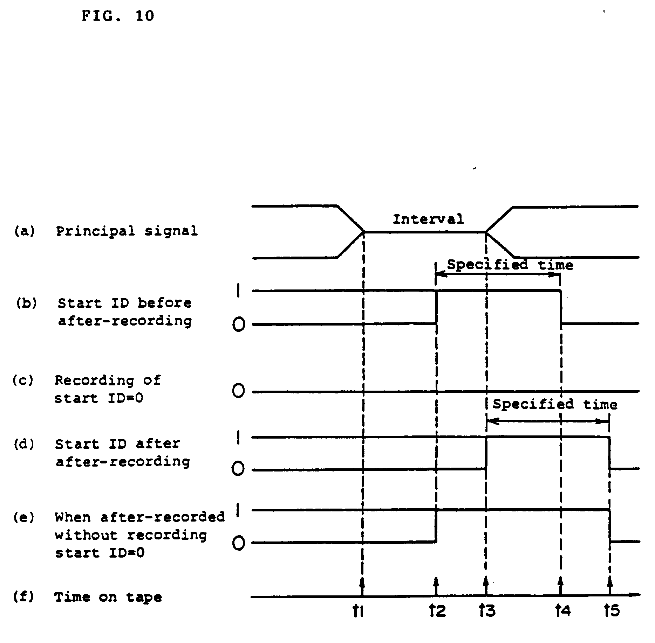

FIG. 10 is a diagram showing the relation between principal signal and start ID. By referring to FIG. 10, a description will be made on the case of moving the position of the start ID=1 in the tape in which the start ID=1 has been once recorded by a short time through after-recording.

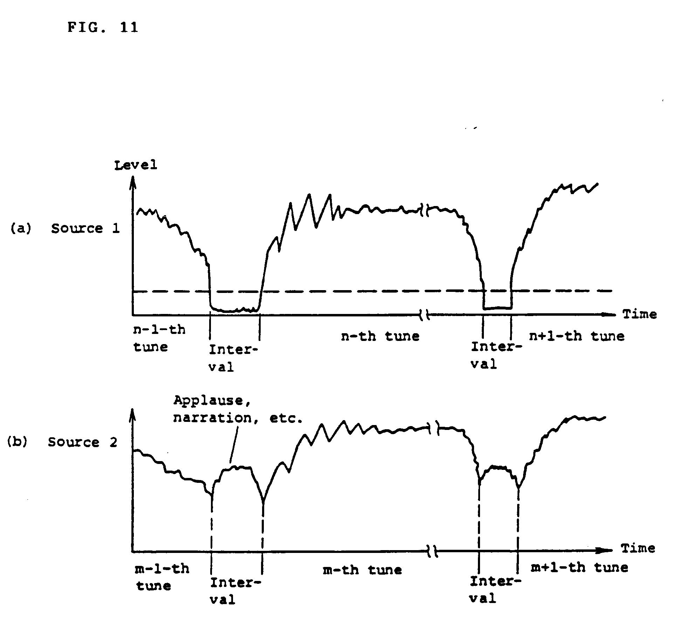

In FIG. 10, symbol a denotes a principal signal having an interval from time t₁ to time t₃, and b is the recorded state of start ID before after-recording, and the start ID=1 is recorded from time t₂ to time t₄ within the interval of tunes. In such a tape, when after-recording the start ID in order to search the beginning of a tune accurately from time t₃, the start ID=0 is once recorded as indicated by c, and the tape position of time t₃ at the beginning of a tune is accurately obtained, and the start ID=1 must be recorded for a specified time (about 9 seconds) from time t₃ to time t₅ as shown by d. If the start ID=1 is after recorded from time t₃ at the beginning of a tune without once recording the start ID=0, the state of start ID=1 persists from time t₂ to time t₅ as shown in e, and it is impossible to search the beginning accurately, and also in the case of rotary head type digital audio tape recorder, as stated above, since the time of start ID=1 is prescribed to be about 9 seconds, and it is not allowed to record the start ID=1 over this specified time. Besides, when after-recording the start ID on a tape in which the source as shown in FIG. 11 is recorded, if (a) there is a time of nearly no-signal level close to noise level in the interval between tunes as in source 1, or (b) there is an applause or narration between tunes as in source 2 and there is no level difference between tunes and tune intervals, the user of the digital tape recorder must find the tape position for starting the recording of start ID=1, that is, the beginning of a tune, by fast-forwarding or rewinding repeatedly to check if the start ID=1 is recorded in that tape position or not, and if the start ID=1 is recorded, the user must record start ID=0, reproduce the principal signal again to find the beginning of a tune, and record the start ID=1 again.

In the hitherto digital tape recorder explained so far, when after-recording the start ID, the user of the digital tape recorder must first search the tape position for recording the start ID=1, and check whether the start ID=1 has been recorded at that tape position or not, and if the start ID=1 is recorded, the user must rewrite the recorded portion of the start ID=1 into start ID=0, and since the tape position is moved as a result, the user must search again for the tape position for recording the start ID=1, and record the start ID=1 for a specified time. Therefore, the user of the digital tape recorder was assigned with complicated works.

This invention is devised in the light of the above problems, and it is hence a primary aim of this invention to present a digital tape recorder not requiring the operation for rewriting the previously recorded start ID=1 into once start ID=0 when after-recording the start ID.

According to the invention there is provided a digital tape recorder comprising:
start ID recording means for recording a start ID signal representative of the start of a program for a specified time; and
start ID detecting means for determining whether a start ID signal exists on a tape after the lapse of the specified time; characterised by
first storing means for storing the position of the tape at the end of said specified time as a first tape position, means for feeding said tape until the end of said previously recorded start ID signal;
second storing means for storing as a second tape position the tape position where the previously recorded start ID ends;
means for rewinding the tape to said first tape position; and
means for overwriting the start ID signal between said first and second tape positions.

With the invention, when recording the start ID=1 again from the beginning of a tune by after-recording in a tape in which the start ID=1 is recorded for a specified time from the tape position slightly delayed in time from the beginning of a tune, first the after-recording means records the start ID=1 for a specified time, and the start ID judging means judges that the start ID=1 has been recorded after the specified time. As a result, the start ID erasing means stores the first tape position after the after-recording means has recorded the start ID=1 for the specified time, and stores the second tape position where the start ID=0 by feeding tape while reproducing the subcode, thereby recording the start ID=0 between the first tape position and second tape position. Therefore, the start ID=1 will not be recorded for a time longer than the specified time. It is hence not necessary for the user to rewrite the previously recorded start ID=1 into the start ID=0.

The present invention will be further described hereinafter with reference to the following description of an exemplary embodiment and the accompanying drawings, in which:
FIG. 1 is a structural drawing of a digital tape recorder described for reference purposes;
FIG. 2 is an outline drawing of signals recorded on a tape;
FIG. 3 is a structural drawing of a digital tape recorder in an embodiment of the invention;
FIG. 4 is a flow chart showing a part of processing of the system controller in the embodiment;
FIG. 5 and FIG. 6 are waveform diagrams for explaining the operation of the embodiment;
FIG. 7, FIG. 8, FIG. 9, FIG. 10 and FIG. 11 are waveform diagrams for explaining the operation of conventional digital tape recorders.

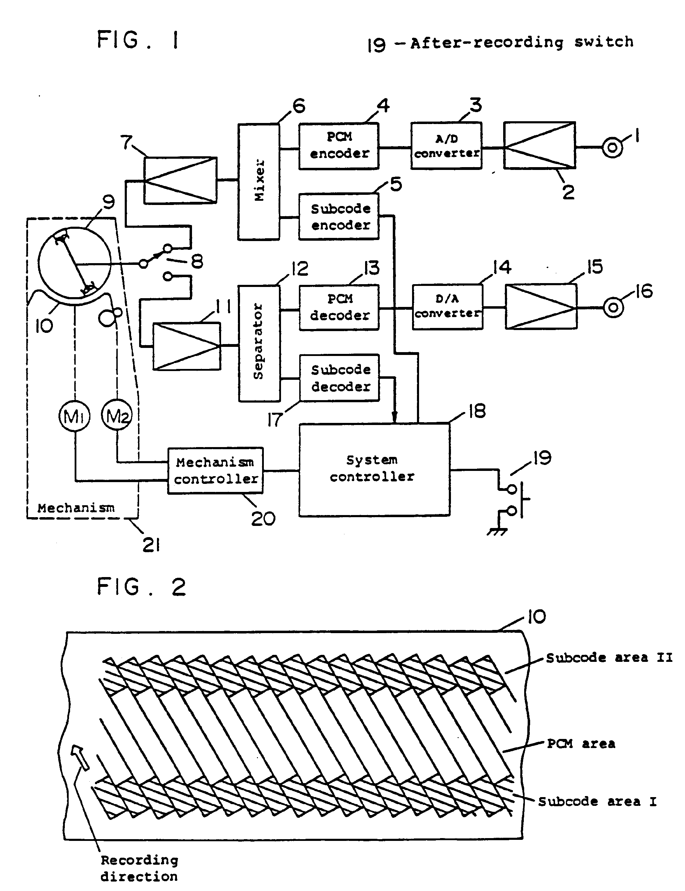

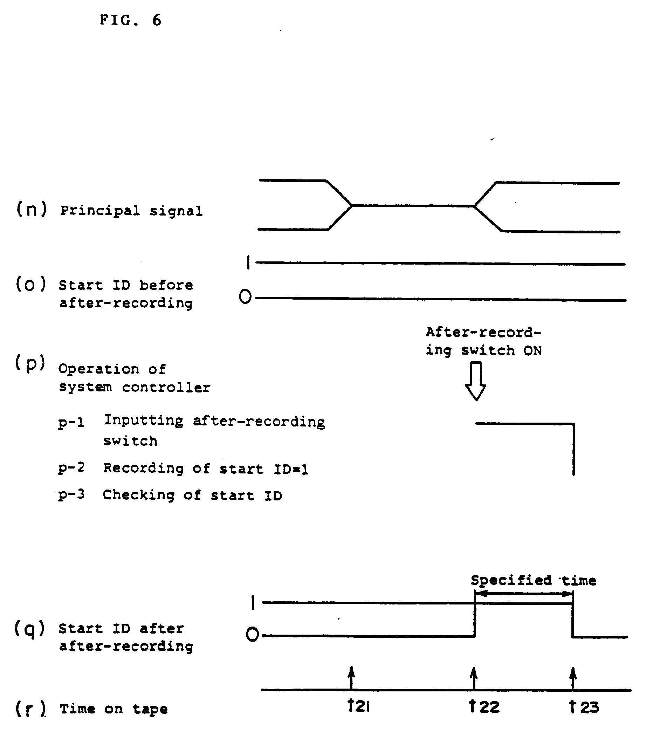

FIG. 1 is a structural drawing of a digital tape recorder described for reference purposes. FIG. 2 is an outline drawing of signals recorded on a tape. In FIG. 1, numeral 1 is an input terminal, 2 is a preamplifier, 3 is an A/D converter, 5 is a PCM encoder for generating PCM signal to be recorded in PCM area in FIG. 2 by interleaving processing for exchanging the time-wise arrangement of digital signals, error correction code addition or other processing, 5 is a subcode encoder for generating subcode signals for recording the start ID, absolute time or other signal into subcode area I and subcode are II in FIG. 2, 6 is a mixer for mixing the PCM signal and the subcode signal, 7 is a recording amplifier, 8 is a switch for changing over recording and reproduction, 9 is a head mounted on the cylinder of a mechanism 21, 10 is a tape recorded in the pattern shown in FIG. 2, 11 is a reproducing amplifier, 12 is a separator for separating the PCM signal and the subcode signal, 13 is a PCM decoder for correcting the error of PCM signal or interleaving to return time-wise, 14 is a D/A converter, 15 is a line amplifier, 16 is an output terminal, 17 is a subcode decoder for obtaining a signal such as start ID from the subcode signal separated by the separator 12. Numeral 18 is a system controller for controlling the entire digital tape recorder, which delivers the subcode information to be recorded in the tape 10 such as start ID to the subcode encoder 5, and receives the subcode information reproduced from the tape 10 through the subcode decoder 17. The system controller 18 is composed of a microcomputer. Numeral 19 is an after-recording switch for commanding start of recording of start ID in subcode area I and subcode area II of the tape 10, and it is connected to the system controller 18. Numeral 20 is a mechanism controller for controlling the mechanism 21 by receiving the command from the system controller 18, and 21 is the mechanism which drives the tape 10, and records the signal into the tape 10 from the head 9 and reproduces the signal from the tape 10.

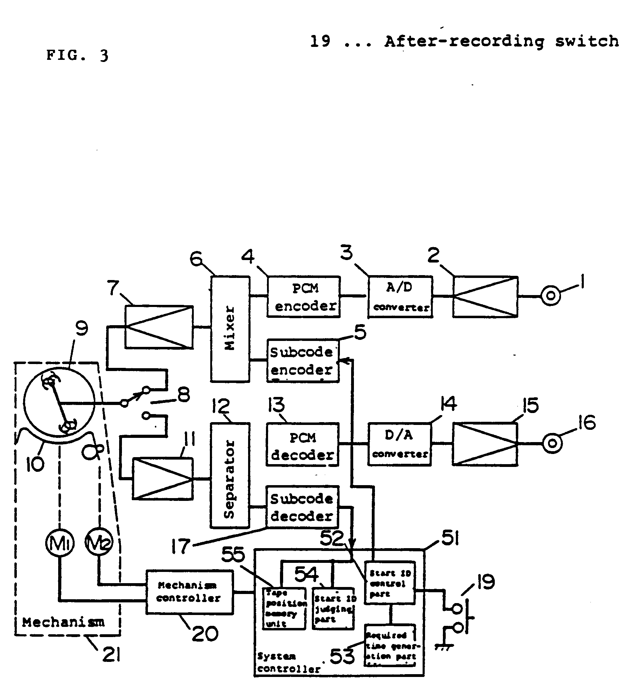

An embodiment of the invention is described next while referring to FIG. 3. In the following explanation, the blocks having the same operations as those in FIG. 1 are identified with the same reference numbers and are not explained again herein.

FIG. 3 is a structural drawing of the digital tape recorder in the second embodiment of this invention. In FIG. 3, numeral 51 is a system controller for controlling the entire digital tape recorder, and it issues the subcode information to be recorded in the tape 10 such as start ID to the subcode encoder 5, and receives the subcode information reproduced from the tape 10 through the subcode encoder 17. The system controller 51 is composed of a microcomputer. Inside there are start ID control part 52 for controlling the recording of 0 or 1 as start ID, specified time generation part 53 for controlling the recording time of start ID=1, start ID judging means 54 for judging whether the reproduced start ID is 0 or 1, and tape position memory unit 55 for storing the absolute time recorded in the subcode area of the tape as a tape position. The after-recording switch 19 and the start ID control part 52, and the specified time generation part 53 and the subcode encoder 5 compose the start ID after-recording means, and the subcode decoder 17 and the start ID judging part 54 compose the start ID judging means, and the subcode decoder 17 and the tape position memory part 55, and the start ID control part 52 and the subcode encoder 5 compose the start ID erasing means.

The operation of the thus composed digital tape recorder is explained below by reference to FIGS. 3, 4, 5 and 6.

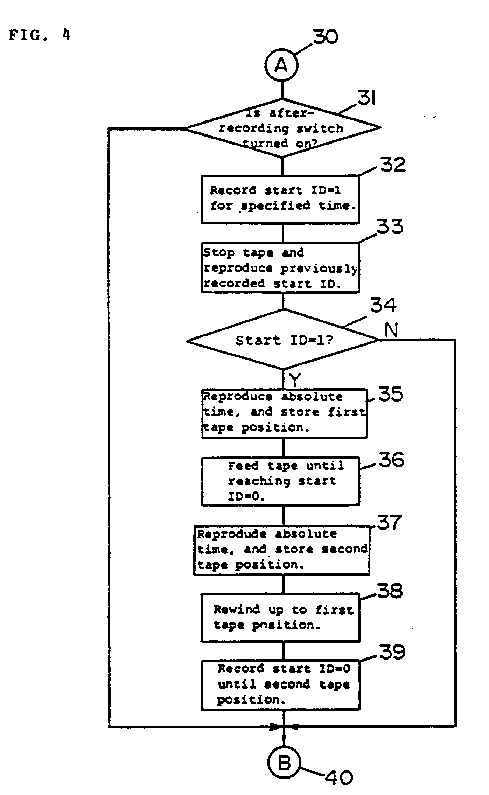

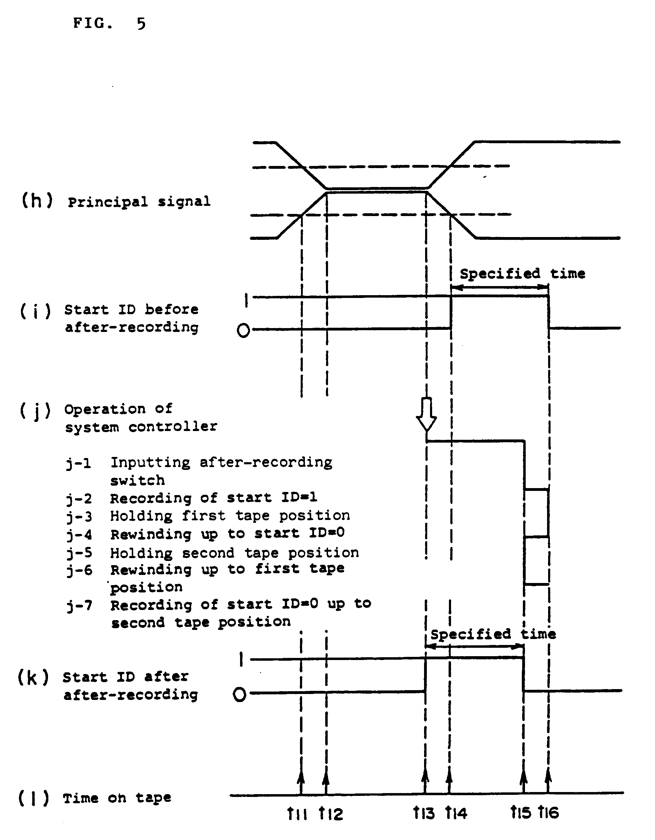

FIG. 4 is a flow chart showing a part of processing of the system controller 51, in which numerals 30, 31 are couplers A, B and are connected to the entire program. FIG. 5 and FIG. 6 are drawings to explain the operation. When re-recording the start ID=1 from time t₁₃ at the beginning of a tune in a tape in which the signal having an interval from time t₁₂ to time t₁₃ as shown in FIG. 5 k is recorded in the PCM area in FIG. 2 and the start ID=1 indicated by i is recorded in the subcode area in FIG. 2 from time t₁₄ to time t₁₆, by pressing the after-recording switch 19 and adjusting the position of the tape 10 to t₁₃, it is judged at the judging step 31 in FIG. 4 that the after-recording switch 19 has been pressed, and the operation advances to the processing step 32, and the start ID control part 52 of the system controller 51 issues a command to the subcode encoder 5 so as to record the start ID=1 in the subcode area of tape 10 for a specified time through the specified time generation part 53 (FIG. 5 j-1, j-2). At time t₁₅ after lapse of the specified time, coming to the processing step 33, the system controller 51 issues a command to the mechanism controller 20 to stop running of the tape, and the start ID of the subcode information which is the output of the subcode encoder 5 is fed into the start ID judging part 54. Next, at the judging step 34, as seen from the start ID before the after-recording indicated in FIG. 5 i, the start ID judging part 54 judges the start ID=1, thereby advancing to the processing step 35. At the processing step 35, the absolute time of the subcode information which is the output of the subcode decoder 17 is fed into the tape position memory unit 55, and the first tape position is stored (FIG. 5 j-3). At the next processing step 36, the system controller 31 feeds the start ID of the output of the subcode decoder 17 into the start ID judging part 54, and issues a command to the mechanism controller 20 to feed the tape until the start ID judging part 54 judges the start ID=0 (FIG. 5 j-4). At time t₁₆, when the start ID judging part 54 judges the start ID=0, the operation advances to the processing step 37, and the tape position memory unit 55 stores the absolute time from the output of the subcode decoder 17 as the second tape position (FIG. 5 j-5). Next, at the processing step 38, the system controller 31 issues a command to the mechanism controller 20 to rewind the tape 10 until the absolute time fed from the subcode decoder 17 becomes equal to the first tape position stored in the tape position memory unit 55 (FIG. 5 j-6), and when reaching the first tape position, the operation advances to the processing step 39 and a command is issued to the subcode encoder 5 to record the start ID=0 into tape 10. When the absolute time or the output of the subcode decoder 17 becomes equal to the second tape position stored in the tape position memory unit 55, the system controller 31 stops recording the start ID=0. As a result, as shown in FIG. 5 k, the start ID after after-recording is changed from 1 to 0 from time t₁₅ to time t₁₆.

The next description relates to the case of recording the start ID=1 from time t₂₂ at the beginning of a tune in a tape having an interval from time t₂₁ to time t₂₂ shown in FIG. 6 n in which start ID=0 is recorded after time t₂₂ as indicated by o. In FIG. 6, p-1 and p-2 correspond to j-1 and j-2 in FIG. 5, and the operation from the judging step 31 to the processing step 33 in FIG. 4 is common with the case shown in FIG. 5, and its explanation is omitted herein. Upon time t₂₃, at the judging step 34, as seen from o in FIG. 6, since the start ID=0 is recorded, the after-recording is terminated upon reaching a coupler B40. As a result, the start ID as shown in FIG. 6 q is recorded in the tape 10.

This embodiment comprises the start ID after-recording means composed of the after-recording switch 19, the start ID control part 52, the specified time generating part 53 and the subcode encoder 5, the start ID judging means composed of the subcode decoder 17 and the start ID judging part 54, and the start ID erasing means composed of the subcode decoder 17, the tape position memory 55, the start ID control part 52 and the subcode encoder 5, whereby when after-recording the start ID=1, after recording the start ID=1 for the specified time, the previously recorded ID is checked, and if the start ID=1 has been recorded, it is detected and rewritten into start ID=0, and therefore in the case of after-recording, the start ID=1 is not recorded for a time longer than the specified time continuously, and the user of the digital tape recorder does not have to operate to record the start ID=0 in advance.

Meanwhile, in this embodiment, the tape position memory unit 55 is to store the tape position at the processing step 35 and the processing step 37, and the absolute time recorded in the tape is recorded, but the tape position memory unit 55 may store the counting value of the tape counter generally in the digital tape recorder in order to store the tape position.

### Industrial Applicability

According to the digital tape recorder of this invention, when the user attempts to re-record the start ID=1 by using a tape in which the start ID=1 has been already recorded, the start ID=1 is recorded in the desired position on the tape for a specified time without rewriting the previously recorded start ID=1 into start ID=0 as required in the prior art, so that digital tape recorder which is very easy to use can be presented.

## Claims

1. A digital tape recorder comprising:
start ID recording means (9) for recording a start ID signal representative of the start of a program for a specified time; and
start ID detecting means (54) for determining whether a start ID signal exists on a tape after the lapse of the specified time; characterised by
first storing means (55) for storing the position of the tape at the end of said specified time as a first tape position (t₁₅) , means for feeding said tape until the end of said previously recorded start ID signal;
second storing means (55) for storing as a second tape position (t₁₆) the tape position where the previously recorded start ID ends;
means for rewinding the tape (M2) to said first tape position; and
means for overwriting the start ID signal between said first and second tape positions.

## Patentansprüche

1. Digitales Bandaufnahmegerät mit:
einem Start- Identifizierungscode- Aufzeichnungsmittel (9) zur Aufnahme eines den Start eines Programms für eine spezifizierte Zeit reprasentierenden Start- Identifizierungscode-Signals; und mit
einem Start- Identifizierungscode- Feststellmittel (54) zur Bestimmung, ob ein Start- Identifizierungscode- Signal nach Ablauf der spezifizierten Zeit auf dem Band existiert;
**gekennzeichnet durch**
ein erstes Speichermittel (55) zur Speicherung der Position des Bandes am Ende der spezifizierten Zeit als eine erste Bandposition (t₁₅), ein Mittel zum Vorschub des Bandes bis zum Ende des zuvor aufgezeichneten Start- Identifizierungscode-Signals;
ein zweites Speichermittel (55) zur Speicherung einer zweiten Bandposition (t₁₆), an der der zuvor aufgezeichnete Start- Identifizierungscode endet;
ein Mittel zum Umspulen des Bandes (M2) auf die erste Bandposition; und durch
ein Mittel zum Überschreiben des Startidentifizierungscode- Signals zwischen der ersten und der zweiten Bandposition.

## Revendications

1. Enregistreur numérique à bande magnétique comprenant:
un moyen (9) d'enregistrement d'identification (ID) de lancement pour enregistrer un signal d'identification de lancement représentatif du lancement d'un programme pendant un temps spécifié; et
un moyen (54) de détection d'identification de lancement pour déterminer si oui ou non un signal d'identification de lancement existe sur une bande après le laps de temps spécifié; caractérisé par
un premier moyen de mémorisation (55) pour prendre en mémoire la position de la bande à la fin dudit temps spécifié, en tant que première position (t15) de bande, un moyen pour avancer ladite bande jusqu'à la fin dudit signal d'identification de lancement enregistré antérieurement;
un second moyen de mémorisation (55) pour prendre en mémoire, en tant que seconde position (t16) de bande, la position de bande où l'identification de lancement enregistrée antérieurement se termine;
un moyen pour rembobiner la bande (M2) jusqu'à ladite première position de bande; et
un moyen pour écrire de façon superposée le signal d'identification de lancement entre lesdites première et seconde positions de bande.
